(19) Europäisches Patentamt
European Patent Office
Office européen des brevets

(11) **EP 3 647 811 B1**

(12) **EUROPEAN PATENT SPECIFICATION**

(45) Date of publication and mention
of the grant of the patent:
**06.12.2023 Bulletin 2023/49**

(51) International Patent Classification (IPC):
*G01S 7/497* (2006.01)  *G01S 7/481* (2006.01)
*G01S 7/487* (2006.01)  *G01S 17/18* (2020.01)

(21) Application number: **18823215.1**

(22) Date of filing: **25.06.2018**

(52) Cooperative Patent Classification (CPC):
**G01S 7/4813; G01S 7/4817; G01S 7/4876;
G01S 7/497; G01S 17/18**

(86) International application number:
**PCT/JP2018/024055**

(87) International publication number:
**WO 2019/004146 (03.01.2019 Gazette 2019/01)**

(54) **INFORMATION PROCESSING DEVICE, CONTROL METHOD, PROGRAM AND RECORDING MEDIUM**

INFORMATIONSVERARBEITUNGSVORRICHTUNG, STEUERUNGSVERFAHREN, PROGRAMM UND AUFZEICHNUNGSMEDIUM

DISPOSITIF DE TRAITEMENT D'INFORMATIONS, PROCÉDÉ DE COMMANDE, PROGRAMME ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2017 JP 2017124949**

(43) Date of publication of application:
**06.05.2020 Bulletin 2020/19**

(73) Proprietor: **Pioneer Corporation
Tokyo 113-0021 (JP)**

(72) Inventors:
• **HAYASHI, Yukio
Kawagoe-shi
Saitama 350-8555 (JP)**
• **ABE, Yoshinori
Kawagoe-shi
Saitama 350-8555 (JP)**

(74) Representative: **Viering, Jentschura & Partner
mbB
Patent- und Rechtsanwälte
Am Brauhaus 8
01099 Dresden (DE)**

(56) References cited:
WO-A1-2011/084799    WO-A1-2014/203654
WO-A1-2018/011878    JP-A- S6 060 576
JP-A- H03 296 309    JP-A- H10 160 837
JP-A- H10 160 837    JP-A- 2001 074 842
JP-A- 2001 074 842    JP-A- 2005 221 336
JP-A- 2014 235 048    JP-A- 2014 235 048

**Description**

TECHNICAL FIELD

The present invention relates to a technology for measuring a distance by use of an electromagnetic ray such as a laser beam.

BACKGROUND TECHNIQUE

Conventionally, there is known a laser radar device which radiates a laser pulse light to a target space of detection and which detects an object located in the target space based on the degree of the reflected light. Some laser radar devices among them applies a filtering process to the output signals of their receiving units in order to raise the signal-to-noise ratio (SNR) . For example, Patent Reference-1 discloses a laser radar device which applies a matched filter to the output signal of its receiving unit.

PRIOR ART REFERENCES

PATENT REFERENCES

Patent Reference-1: Japanese Patent Application Laid-open under No. 2007-225318
WO 2014/203654 A1 describes a modulation optical system for irradiating laser light of multiple wavelengths. An absorbing unit absorbs a beam and switches the background measurement period measuring the background signal at high speed at an appropriate interval between 1 millisecond and 10 seconds.
JP H10 160837 A describes a radar apparatus used in a collision warning system using millimeter wave radio waves or laser beams.
WO 2011/084799 A1 describes a system to compensate for stray light errors in time of flight camera systems that uses reference targets in the field of view that can be used to measure stray light.
JP 2014 235048 A describes a radar device to enable a target to be detected with high accuracy in a short time, even in an environment where a signal to noise ratio is low.

SUMMARY OF THE INVENTION

PROBLEM TO BE SOLVED BY THE INVENTION

A matched filter is a receiving filter which is optimal under such circumstances that the noise is a white noise. Thus, when the noise component included in the output signal of the receiving unit varies, it is necessary to perform a filtering process in consideration of the variation of the noise component such as noise whitening. In particular, when a laser radar device mounted on a vehicle such as a lidar emits an electromagnetic ray while changing its emitting direction, the noise component included in the output signal of the receiving unit changes due to the difference of the amount of the received background light depending on the emitting direction.
The above is an example of the problem to be solved by the present invention. An object of the present invention is to provide an information processing device capable of achieving a preferable SNR even under such circumstances that the noise component of the output signal of the receiving unit changes.

MEANS FOR SOLVING THE PROBLEM

The object is achieved by the present invention in the aspects of an information processing device, a control method, a program and a storage medium having the features of the independent claims. Additional features for advantageous embodiments of the present invention are provided in the dependent claims.

BRIEF DESCRIPTION OF THE DRAWINGS

FIG. 1 illustrates an overall configuration of a lidar according to an embodiment.
FIGS. 2A and 2B illustrate configurations of a transmitter and a receiver.
FIG. 3 illustrates a configuration of a scan optical component.
FIG. 4 illustrates a register configuration example of control signals generated by a synchronization controller.

FIG. 5 illustrates the time variations of the control signals generated by a synchronization controller.

FIGS. 6A to 6F illustrate graphs indicative of a relation between the output signal of an ADC and its gate.

FIGS. 7A to 7D illustrate waveforms of a pulse trigger signal, a receiving segment signal and an AD gate signal in cases that a pre-trigger period is provided.

FIG. 8A illustrates time variations of the pulse trains of a rotary encoder.

FIG. 8B illustrates a temporal relation between the encoder pulses and segment slots at steady state.

FIGS. 9A and 9B schematically illustrate the arrangements of a dark reference reflective member and a light reference reflective member.

FIG. 10A and FIG. 10B illustrate the receiver noise spectrum, the background light shot noise spectrum and the overall noise spectrum.

FIG. 11 is a block diagram of a DSP.

FIG. 12 is a block diagram of a filtering unit.

FIG. 13A is a block diagram of a noise estimator and FIG. 13B is a block diagram of a receiver noise estimation part.

FIG. 14 is a block diagram of a shot noise estimation part.

FIG. 15 is a block diagram of a reference receiving pulse estimator.

## DETAILED DESCRIPTION OF THE PREFERRED EMBODIMENTS

According to the present invention, there is provided an information processing device as defined in the appended independent claim 1.

In one mode of the information processing device, the process unit is a matched filter which whitens a noise of the output signal of the receiving unit. According to this mode, the information processing device whitens the noise of the output signal of the receiving unit based on the first noise signal thereby to suitably achieve the optimal SNR through a matched filter.

In still another mode of the information processing device, the process unit processes the output signal of the receiving unit in a frequency domain. According to this mode, at the time of calculating the inverse characteristics of the noise spectrumbased on the first noise signal and the like, the information processing device can substitute the multiple operation in the frequency domain for the convolution operation in the time domain, therefore suitably reducing the amount of calculation.

According to the present invention, there is provided a control method executed by an information processing device, as defined in the appended independent claim 4.

According to the present invention, there is provided a program executed by a computer of the information processing device as defined in the appended claim 5. By executing the program, the computer can achieve a preferable SNR. The program can be treated in a state that it is stored in a storage medium.

According to a non-claimed embodiment, there is provided an information processing device including: an emitting unit which emits an electromagnetic ray while changing an emitting direction thereof; a receiving unit which receives a reflective ray that is the electromagnetic ray reflected by an object; a processing unit configured to process the output signal of the receiving unit; and an estimation unit configured to estimate a noise component included in the output signal, wherein the processing unit applies a whitening process to a noise of the output signal based on an estimate by the estimation unit and applies a filtering to the output signal with the noise to which the whitening process is applied. Even according to this mode, the information processing device can achieve a preferable SNR.

According to a non-claimed embodiment, there is provided an information processing device including: an emitting unit which emits an electromagnetic ray while changing an emitting direction thereof; a receiving unit which receives a reflective ray that is the electromagnetic ray reflected by an object; and a processing unit configured to process an output signal of the receiving unit on a basis of information associated with a first noise that is generated due to the receiving unit, the information being stored on a storage unit in advance. Even according to this mode, the information processing device can achieve a preferable SNR.

## EMBODIMENT

Now, preferred embodiments of the present invention will be described below with reference to the attached drawings.

<Basic Explanation>

First, a description will be given of the basic configuration of a lidar according to the embodiment.

(1) Entire Configuration

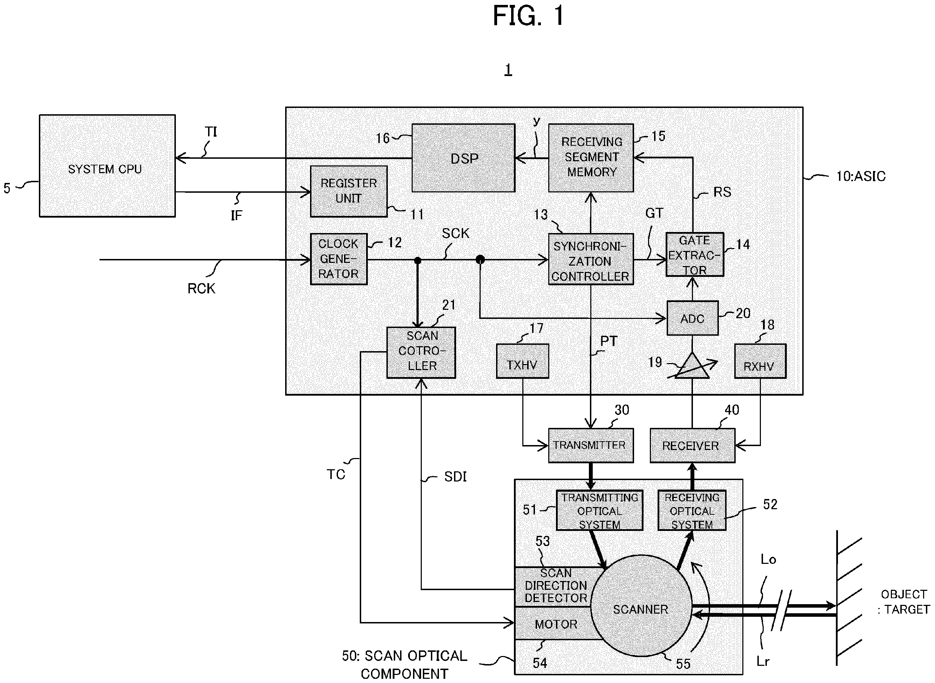

FIG. 1 illustrates an entire configuration of a lidar 1 according to the embodiment. The lidar 1 scans peripheral space by properly controlling the outgoing direction (hereinafter, referred to as "scan direction") of pulsed light beams repeatedly emitted and monitors the return light thereof. Thereby, the lidar 1 recognizes information (e.g., the distance, the existence probability or the reflection rate) associated with an object situated in the vicinity. Specifically, the lidar 1 emits a pulsed light beam (hereinafter, referred to as "outgoing light Lo") and receives the pulsed light beam (hereinafter, referred to as "return light Lr") reflected by an external object (target) to thereby generate information associated with the object. The lidar 1 is an example of the "information processing device" according to the present invention.

As illustrated in FIG. 1, the lidar 1 mainly includes a system CPU 5, an ASIC 10, a transmitter 30, a receiver 40 and a scan optical component 50. The transmitter 30 repeatedly outputs a pulsed laser light with the width of approximately 5 nsec in response to the pulse trigger signal "PT" supplied from the ASIC 10. The pulsed laser light outputted by the transmitter 30 is supplied to the scan optical component 50.

The scan optical component 50 emits (radiates) the pulsed laser light outputted by the transmitter 30 to a proper direction while collecting the return light Lr and supplying the return light Lr to the receiver 40, wherein the return light Lr is returned after the reflection or diffusion at an object in a space . According to the embodiment, at the scan optical component, there are provided a dark reference reflective member 7 which absorbs the outgoing light Lo emitted in a first scan direction and a light reference reflective member 8 which reflects the outgoing light Lo emitted in a second scan direction. The scan optical component 50 is an example of the "emitting unit" according to the present invention. The receiver 40 supplies the ASIC 10 with a signal in accordance with the intensity of the return light Lr. The receiver 40 is an example of the "receiving unit" according to the present invention.

The ASIC 10 estimates and outputs parameter(s) (e.g., distance) associated with an object situated in the scan space by analyzing the output signal of the receiver 40. The ASIC 10 also controls the scan optical component 50 to provide a proper scan. Furthermore, the ASIC 10 supplies the transmitter 30 and the receiver 40 with high voltages necessary for them, respectively.

The system CPU 5 at least performs an initial setup, surveillance, and/or control of the ASIC 10 through a communication interface. Other functions thereof depend on the application. For the simplest lidar, the system CPU 5 only converts the target information "TI" outputted by the ASIC 10 into a proper formats and outputs it. For example, after converting the target information TI into point cloud formats with high flexibility, the system CPU 5 outputs it through a USB interface.

(2) Transmitter

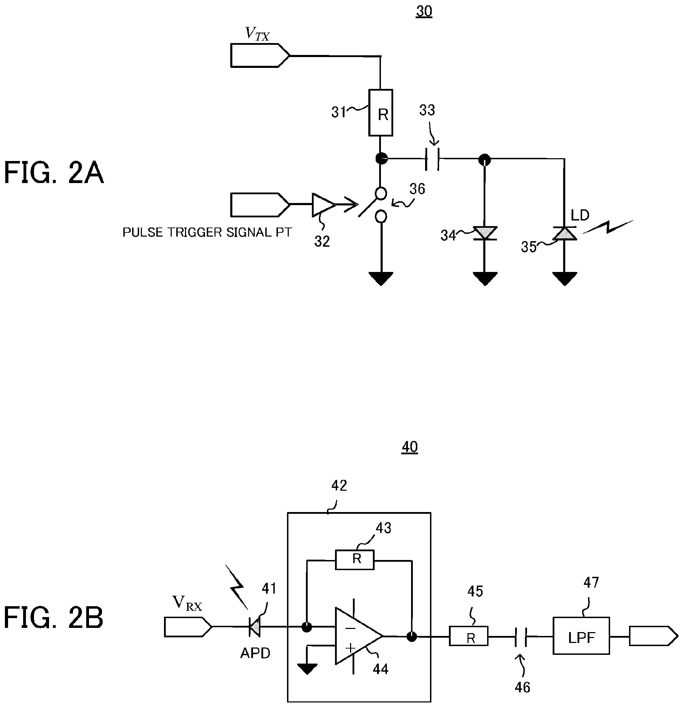

The transmitter 30 repeatedly outputs a pulsed laser light with the width of approximately 5 nsec in response to the pulse trigger signal PT supplied from the ASIC 10. FIG. 2A illustrates the configuration of the transmitter 30. The transmitter 30 includes a charging resistor 31, a driver circuit 32, a capacitor 33, a charging diode 34, a laser diode (LD) 35 and a CMOS switch 36.

The pulse trigger signal PT inputted from the ASIC 10 drives the CMOS switch 36 via the driver circuit 32. The driver circuit 32 is provided for prompt driving of the COMS switch 36. The COMS switch is open during a deassertion period of the pulse trigger signal PT and the capacitor 33 in the transmitter 30 is charged with the high voltage $V_{TX}$ supplied from the ASIC 10. In contrast, during an assertion period of the pulse trigger signal PT, the CMOS switch 36 is close and the charge stored on the capacitor 33 is discharged through the LD 35. As a result, a pulsed laser light is outputted from the LD 35.

(3) Receiver

The receiver 40 outputs a voltage signal proportional to the intensity of the return light Lr returned from an object. Generally, since light detecting elements such as an APD output current, the receiver 40 converts (i.e., performs I/V conversion) the current into the voltage to output it. FIG. 2B illustrates a configuration of the receiver 40. The receiver 40 includes an APD (Avalanche Photodiode) 41, an I/V converter 42, a resistor 45, a capacitor 46 and a lowpass filter (LPF) 47. The I/V converter 42 includes a feedback resistor 43 and an operational amplifier 44. It is noted that the receiver noise to be mentioned later includes the heat noise generated at the feedback resistor 43, the current noise and the voltage noise generated at the operational amplifier 44.

According to the embodiment, the APD 41 is used as a light detecting element. The high voltage $V_{RX}$ supplied from the ASIC 10 is applied to the APD 41 as a reverse bias and the detection current proportional to the return light Lr returned from an object passes through the APD 41. A high gain of the APD 41 can be obtained by applying a revers bias which approximates the breakdown voltage of the APD 41, which enables the APD 41 to detect even a weak return light Lr. The LPF 47 situated at the last position is provided for restricting the bandwidth of the signal prior to sampling by the ADC 20 in the ASIC 10. According to the embodiment, the sampling frequency of the ADC 20 is 512 MHz and the cutoff frequency of the LPF 47 is approximately 250 MHz.

(4) Scan Optical Component

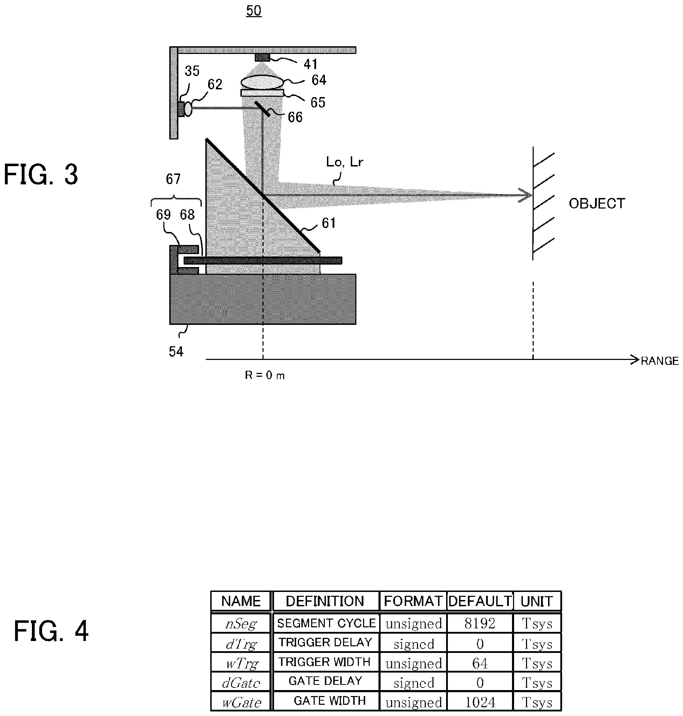

The scan optical component 50 emits the pulsed laser light inputted from the transmitter 30 as the outgoing light Lo to a proper direction while collecting the return light Lr and supplying the return light Lr to the receiver 40, wherein the return light Lr is the outgoing light Lo returned after the reflection or diffusion at an object in a space. FIG. 3 illustrates a configuration example of the scan optical component 50. The scan optical component 50 includes a revolving mirror 61, a collimator lens 62, a collecting lens 64, an optical filter 65, a coaxial mirror 66 and a rotary encoder 67.

The pulsed laser light outputted from the LD 35 of the transmitter 30 enters the collimator lens 62. The collimator lens 62 collimates the laser light within a proper divergent angle (generally, approximately within the range of 0 to 1 degree). The light emitted from the collimator lens 62 is reflected by the small coaxial mirror 66 towards the downward direction to thereby enter the rotational axis (center) of the revolving mirror 61. The revolving mirror 61 reflects the laser light which is incident from the upward direction to the horizontal direction to thereby emit the laser light into a scan space. The revolving mirror 61 is provided at the revolving part of the motor 54 and the laser light reflected by the revolving mirror 61 scans, as the outgoing light Lo, a horizontal plane along with the rotation of the motor 54.

The return light Lr, which gets back to the lidar 1 through the reflection or diffusion at the object situated in the scan space, is reflected by the revolving mirror 61 towards the upward direction to enter the optical filter 65. Together with the return light Lr, the background light, which is generated through the irradiation of the object by the sun, also enters the optical filter 65. The optical filter 65 is provided to selectively eliminate such background light. Specifically, the optical filter 65 selectively passes components having a wavelength within the range of the wavelength (905 nm according to the embodiment) of the outgoing light Lo plus or minus 10 nm. In such a case that the passband width of the optical filter 65 is large, a large amount of background light enters the following receiver 40. As a result, unfortunately, a large DC current component appears in the output of the APD 41 of the receiver 40 and the shot noise (background light shot noise) generated due to the DC component degrades the signal-to-noise ratio. On the other hand, if the passband width was too narrow, the outgoing light Lo itself couldbe also suppressed, which leads to undesirable result. The collecting lens 64 collects the light which passes through the optical filter 65 and then supplies it to the APD 41 of the receiver 40.

The rotary encoder 67 is provided on the motor 54 to detect the scan direction. The rotary encoder 67 includes a spinning disk 68 provided on the revolving part of the motor and a code detector 69 mounted on the base of the motor. Slits which illustrate rotational angles of the motor 54 are marked on the outer circumference of the spinning disk 68. The code detector 69 reads the slits and outputs the result. Specifications of the rotary encoder 67 and the motor control based on the output thereof will be explained later.

According to the above configuration, the collimator lens 62 constitutes the transmitting optical system 51 in FIG. 1, the revolving mirror 61 constitutes the scanner 55 in FIG. 1, the optical filter 65 and the collecting lens 64 constitute the receiving optical system 52 in FIG. 1 and the rotary encoder 67 constitutes the scan direction detector 53 in FIG. 1.

(5) ASIC

The ASIC 10 controls the timing of the pulsed laser light and performs the AD conversion of the APD output signal. Through a proper signal processing on the output of the AD conversion, the ASIC 10 estimates a parameter (e.g., distance and return light intensity) relating to the object and outputs the estimate result to an external device. As illustrated in FIG. 1, the ASIC 10 includes a register unit 11, a clock generator 12, a synchronization controller 13, a gate extractor 14, a receiving segment memory 15, a DSP 16, a transmitter high voltage generator (TXHV) 17, a receiver high voltage generator (RXHV) 18, a pre-amplifier 19 and an AD converter 20 and a scan controller 21.

On the register unit 11, there are provided communication registers capable of communicating with the system CPU 5 that is an external processor. The registers provided on the register unit 11 fall roughly into two types of registers, a R register which can only be referred to by an external and a W register which can be configured by an external. The R register mainly stores internal status values of the ASIC 10, and the system CPU 5 can monitor the internal status values of the ASIC 10 by reading the internal status values through a communication interface. In contrast, the w register stores various parameter values to be referred to in the ASIC 10. These parameter values can be determined by the system CPU 5 through the communication interface. It is noted that the communication registers may be implemented as a flip-flop circuit or may be implemented as a RAM.

The clock generator 12 generates a system clock "SCK" to supply it to each block in the ASIC 10. Most blocks in the ASIC 10 act in synchronization with the system clock SCK. The frequency of the system clock SCK according to the embodiment is 512 MHz. The system clock SCK is generated in a PLL (Phase Locked Loop) so as to synchronize with a reference clock "RCK" inputted from an external. Normally, a crystal oscillator is used as a generator of the reference clock RCK.

The TXHV 17 generates the DC (direct-current) high voltage (approximately 100 V) which is necessary for the transmitter 30. The high voltage is generated through a DCDC converter circuit which raises the low voltage (approximately 5V to 15V).

The RXHV 18 generates the DC (direct-current) high voltage which is necessary for the receiver 40. The high voltage is generated through a DCDC converter circuit which raises the low voltage (approximately within the range of 5V to 15V).

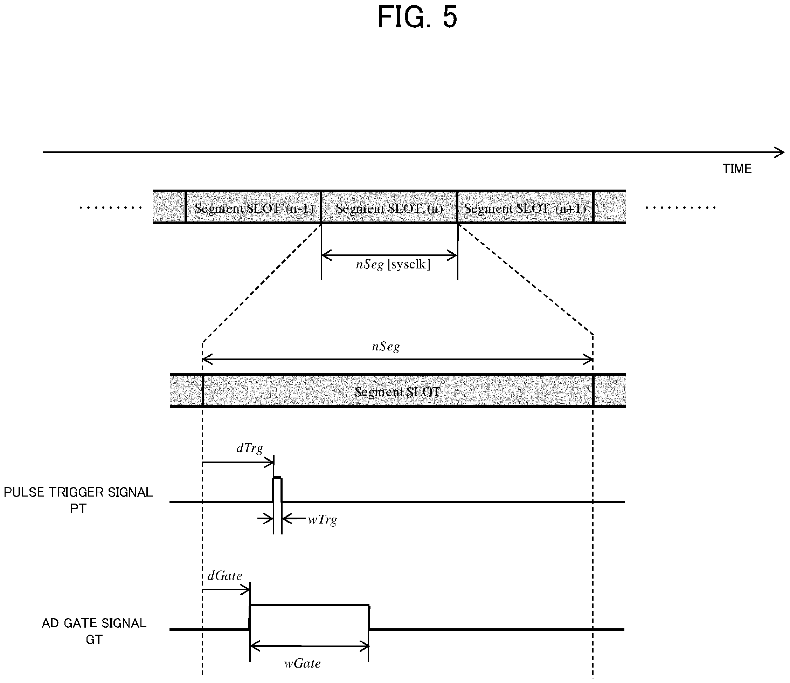

The synchronization controller 13 generates and outputs various control signals. The synchronization controller 13 according to the embodiment outputs two control signals, i.e., the pulse trigger signal PT and an AD gate signal "GT". FIG. 4 illustrates a configuration example of these control signals and FIG. 5 illustrates the temporal relation between the two control signals. As illustrated in FIG. 5, these control signals are generated in synchronization with evenly-divided time sections (segment slots) . The time length (segment cycle) of each segment slot can be configured by use of "nSeg". Hereinafter, "nSeg = 8192" is assumed in the embodiment if there is no mention of the segment cycle.

The pulse trigger signal PT is supplied to the transmitter 30 which is provided outside the ASIC 10. The transmitter 30 outputs the pulsed laser light in accordance with the pulse trigger signal PT. For the pulse trigger signal PT, a time delay "dTrg" from the start point of the segment slot and a pulse width "wTrg" can be configured. It is noted that the transmitter 30 does not react if the pulse width wTrg is too narrow. Thus, the pulse width wTrg may be determined in consideration of the specifications of the transmitter 30 regarding the trigger response.

The AD gate signal GT is supplied to the gate extractor 14. As is mentioned below, the gate extractor 14 extracts each section (period), in which the AD gate signal GT is asserted, from the ADC output signal inputted from the ADC 20 and then stores it on the receiving segment memory 15. For the AD gate signal GT, the delay time "dGate" from the start point of the segment slot and the gate width "wGate" can be configured.

The pre-amplifier 19 amplifies the analog voltage signal inputted from the receiver 40 which is provided outside the ASIC 10 and supplies it to the following ADC 20. It is noted that the gain of the voltage of the pre-amplifier 19 can be configured through the w register.

The ADC 20 converts the output signal of the pre-amplifier 19 into a digital signal through the AD conversion. According to the embodiment, the system clock SCK is used as the sampling clock of the ADC 20 and therefore the input signal of the ADC 20 is sampled at 512 MHz.

The gate extractor 14 extracts, from the ADC output signal inputted from the ADC 20, only each sectional signal corresponding to the assertion period of the AD gate signal GT and stores it on the receiving segment memory 15. Each sectional signal extracted by the gate extractor 14 is referred to as "receiving segment signal RS". In other words, the receiving segment signal RS is a real vector whose vector length is equal to the gate width wGate.

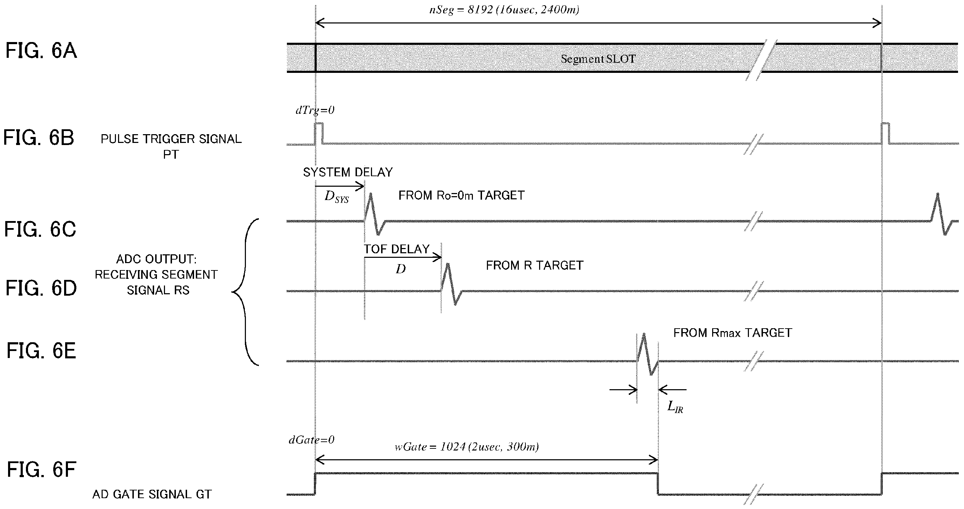

Here, a description will be given of the relation between the ADC output signal and the receiving segment and the settings of the gate position. FIG. 6A illustrates a segment slot. As illustrated in FIG. 6B, the pulse trigger signal PT is asserted with a delay time dTrg from the start point of the segment slot. According to the example illustrated in FIGS. 6A to 6E, the pulse trigger signal PT is asserted at the start point of the segment slot since "dTrg = 0" is satisfied. FIG. 6C illustrates an output signal (i.e., receiving segment signal RS) of the ADC 20 in a case that an object is provided at the scan origin point of a lidar. Namely, FIG. 6C illustrates a receiving segment signal RS in a case that the target distance (moving radius R) is 0 meter. As illustrated, even when the R = 0 m is satisfied, the receiving segment signal RS is monitored in a state that the rise of the receiving segment signal RS lags behind the rise of the pulse trigger signal PT by the system delay $D_{SYS}$. It is noted that examples of the cause of the generation of the system delay $D_{SYS}$ include an electronic delay of the LD driver circuit in the transmitter 30, an optical delay of the transmitting optical system 51, an optical delay of the receiving optical system 52, an electronic delay of the receiver 40 and a conversion delay of the ADC 20.

FIG. 6D illustrates the receiving segment signal RS in a case that the object is situated away by the moving radius R. In this case, compared to FIG. 6C, the delay increases by the round-trip time of the light between the scan origin point and the object. This increase in the delay is so-called "TOF (Time Of Flight) ". If the TOF delay corresponds to D samples, the moving radius R can be calculated according to the following equation.

$$R = D \, (c/2) \, / \, Fsmp$$

FIG. 6F illustrates the AD gate signal GT at the time when "dGate = 0" is satisfied. As mentioned above, the gate extractor 14 extracts only the section where the AD gate signal GT is asserted from the output signal of the ADC 20. The DSP 16 to be mentioned later estimates parameter(s) relating to the object only based on the extracted section. Thus, when the TOF delay time is long, the pulse component corresponding to the return light from the object shifts out of the gate, thus leading to inability to correctly estimate the parameter(s). In order to correctly estimate the parameter (s) , the TOF delay time is required to satisfy the following equation.

$$D \leq D_{MAX} \equiv wGate - D_{SYS} - L_{IR}$$

"$L_{IR}$" stands for the length of the impulse response of the system and "$D_{MAX}$" stands for the maximum TOF delay time which makes the correct parameter estimation possible. FIG. 6E illustrates the receiving segment signal RS at the time when the TOF delay time is equal to the maximum TOF delay time.

Instead of the example illustrated in FIGS. 6A to 6F, the gate delay dGate may be set to the same value as the system delay time. According to the above setting, it is possible to correctly estimate the parameters even when the object is distant.

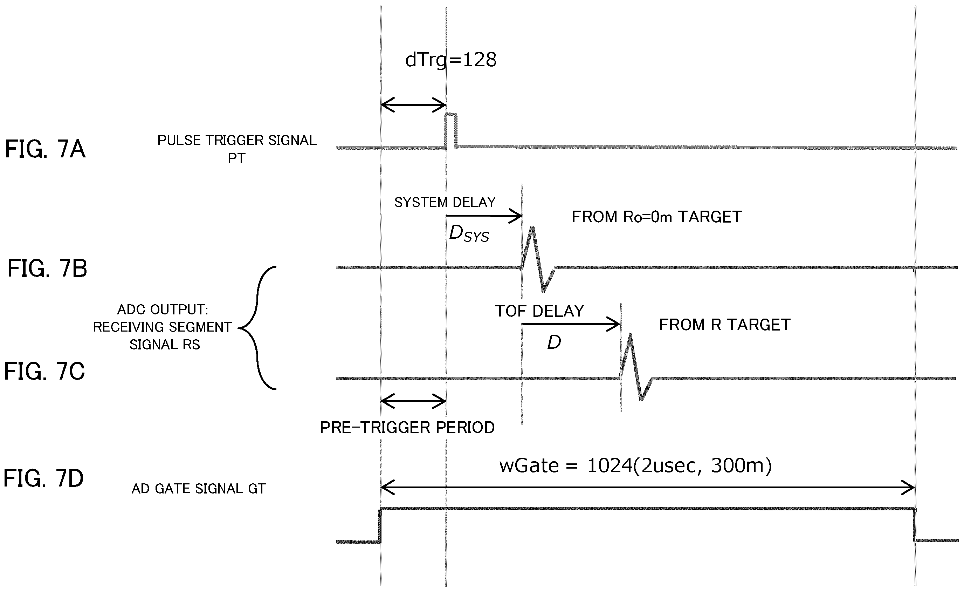

According to the embodiment, by setting the time delay dTrg from the start point of the segment slot to a predetermined value larger than 0, the lidar 1 provides an interval (referred to as "pre-trigger period Tp") from the time when the AD gate signal "GT has just asserted to the time when the pulse trigger signal PT has just asserted. FIGS. 7A to 7D illustrate the pulse trigger signal PT, the receiving segment signal RS and the AD gate signal GT in cases that the time delay dTrg is set to "128". As described later, on the basis of the receiving segment signal RS obtained in the pre-trigger period Tp, the lidar 1 estimates shot noise generated due to the background light.

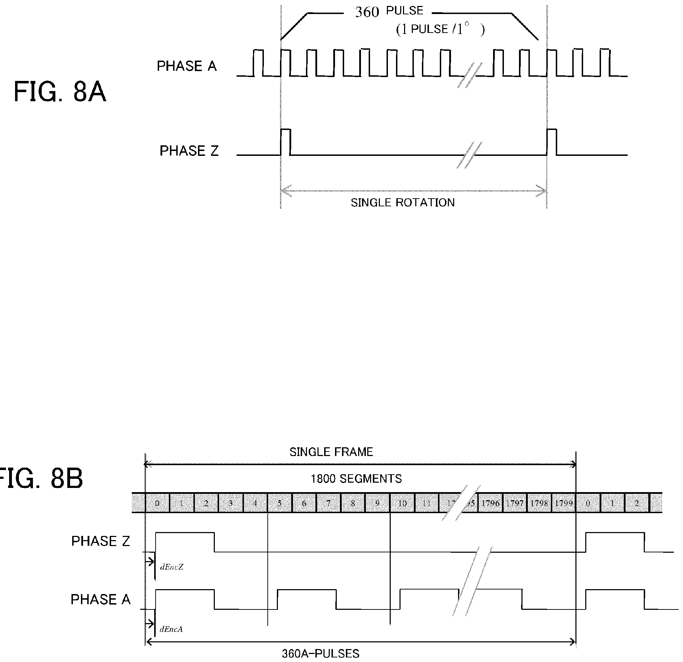

The scan controller 21 monitors the output of the rotary encoder 67 which is provided outside the ASIC 10 and controls the rotation of the motor 54 based thereon. Specifically, the scan controller 21 supplies the torque control signal "TC" to the motor 54 on the basis of the scan direction information "SDI" outputted from the rotary encoder 67 (scan direction detector 53) of the scan optical component 50. The rotary encoder 67 according to the embodiment outputs two pulse trains (hereinafter, referred to as "encoder pulses"), the A-phase and the Z-phase. FIG. 8A illustrates the temporal relation between the both pulse trains. As illustrated, as for the A-phase, one pulse is generated and outputted per one degree of rotation of the motor 54. Thus, 360 A-phase encoder pulses are generated and outputted per one rotation of the motor 54. In contrast, as for the Z-phase, one pulse is generated and outputted per one rotation of the motor 54 at a predetermined rotational angle of the motor 54.

The scan controller 21 measures the time of the rise of the encoder pulses to count the counter value of the system clock SCK, and controls the torque of the motor 54 so that the counter value becomes a predetermined value. Namely, the scan controller 21 performs a PLL control of the motor 54 so that the encoder pulses and the segment slot have a desirable temporal relation. FIG. 8B illustrates a temporal relation between the encoder pulses in the stationary state and the segment slot. According to the example illustrated in FIG. 8B, a single frame has 1800 segments and the motor 54 rotates once per single frame.

(6) DSP

The DSP 16 sequentially reads out the receiving segment "$y_{frm, seg}$" from the receiving segment memory 15 and processes it, wherein "frm" indicates the index of the frame and "seg" indicates the index of the segment. Hereinafter, these indexes are omitted when the misunderstanding is unlikely to occur. The receiving segment y is a real vector with the vector length wGate and is expressed as the following equation.

$$\mathbf{y} = \{ y_k : k = 0,1, \cdots, wGate - 1 \}$$

The detailed configuration of the DSP 16 will be described later. The DSP 16 is an example of the "first estimation unit", the "second estimation unit", the "estimation unit", the "processing unit" and the "computer" which executes the program according to the present invention.

(7) Dark Reference Reflective Member and Light Reference Reflective Member

The lidar 1 includes the dark reference reflective member 7 which absorbs the outgoing light Lo emitted in a first scan direction. The DSP 16 acquires the receiving segment y corresponding to the first scan direction in which the light is incident onto the dark reference reflective member 7, and the DSP 16 uses the acquired receiving segment y as a standard output signal of the APD 41 at the time of estimation of the receiver noise and the shot noise to be mentioned later. The lidar 1 also includes the light reference reflective member 8 which reflects the outgoing light Lo in a second scan direction. On the basis of the receiving segment y corresponding to the second scan direction in which the light is incident onto the light reference reflective member 8, the DSP 16 estimates an impulse response "h" with which the DSP 16 convolves (does a circular convolution) the receiving segment y.

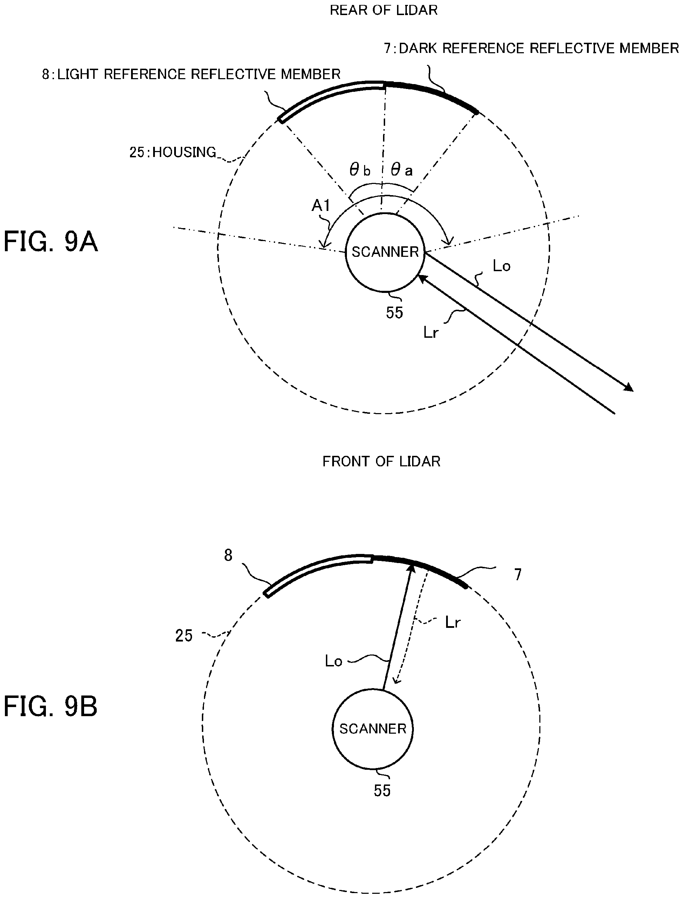

FIG. 9A schematically illustrates the arrangements of the dark reference reflective member 7 and the light reference reflective member 8. In FIG. 9A, the dark reference reflective member 7 and the light reference reflective member 8 are respectively arranged at or near a housing 25 of the lidar 1, wherein the housing 25 houses the scanner 55 and is formed into a nearly cylindrical shape.

The dark reference reflective member 7 and the light reference reflective member 8 are provided on the undetected target direction (see arrow A1) that is the direction other than the target direction for detection of an object by the lidar 1 in the 360-degree emitting direction of the outgoing light Lo by the scan of the scanner 55. According to the example illustrated in FIG. 9A, the dark reference reflective member 7 is situated on the wall surface of the housing 25, which is irradiated with the outgoing light Lo corresponding to an angle range "θa" in the rear of the lidar 1. The light reference reflective member 8 is situated on the wall surface of the housing 25, which is irradiated with the outgoing light Lo corresponding to an angle range "θb" in the rear of the lidar 1. In this case, for example, the dark reference reflective member 7 and the light reference reflective member 8 are provided on the inside of a transparent cover of the housing 25 which the outgoing light Lo and the return light Lr pass through, respectively. In another example, the dark reference reflective member 7 may be a portion of the above transparent cover of the housing 25 processed (e.g., coated with black) to absorb the outgoing light Lo and the light reference reflective member 8 may be another portion of the above transparent cover of the housing 25 processed to reflect the outgoing light Lo.

Hereinafter, for a time span (i.e., one frame period) of a single time scan by the scanner 55, a time period in which the APD 41 receives the outgoing light Lo reflected by the dark reference reflective member 7 is referred to as "dark reference period Td" and another time period in which the APD 41 receives the outgoing light Lo reflected by the light reference reflective member 8 is referred to as "light reference period Tr". The dark reference period Td includes multiple segment periods corresponding to scan angles at which the outgoing light Lo is incident onto the dark reference reflective member 7 and the light reference period Tr includes multiple segment periods corresponding to scan angles at which the outgoing light Lo incident onto the light reference reflective member 8. For a single frame period, a time period in which the lidar 1 radiates the outgoing light Lo in the target direction (i.e., direction other than the direction indicated by the arrow A1) for detection of the object is referred to as "target period Tt". Information (e.g., segment index) associated with the above scan angles at which the outgoing light Lo is incident on the dark reference reflective member 7 and the light reference reflective member 8 is stored on the W register in advance so that the DSP 16 can refer to the information, respectively.

FIG. 9B illustrates a state that the outgoing light Lo is emitted towards the direction in which the dark reference reflective member 7 is arranged according to the example illustrated in FIG. 9A. When the outgoing light Lo is incident onto the dark reference reflective member 7, the dark reference reflective member 7 absorbs at least a part of the outgoing light Lo. It is noted that, if the dark reference reflective member 7 is made of materials which completely absorbs the outgoing light Lo, the return light Lr is not generated.

<Noise Whitening Matched Filter>

The DSP 16 dynamically estimates the overall noise spectrum by combining the estimate of the receiver noise generated in the dark reference period Td with the estimate of the shot noise generated in the target period Tt. Then, the DSP 16 applies the matched filter to the receiving segment y whose noise is whitened by the estimated overall noise spectrum. Thereby, the DSP 16 suitably achieves the maximization of the SNR.

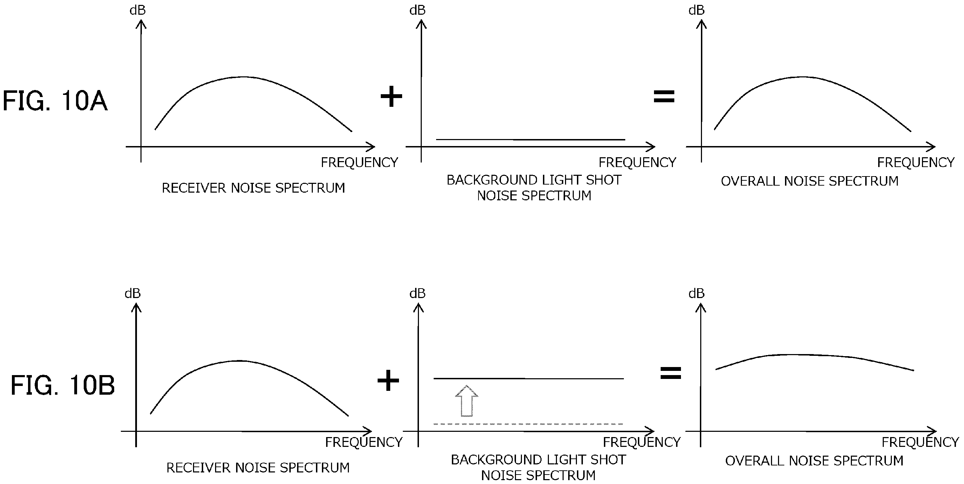

First, with reference to FIGS. 10A and 10B, a description will be given of the overall noise spectrum to be estimated.

FIG. 10A illustrates the receiver noise spectrum, the background light shot noise spectrum and the overall noise spectrum in cases that the amount of the background light which the APD 41 receives is relatively small. As illustrated in FIG. 10A, the overall noise spectrum is equivalent to the sum of the receiver noise spectrum and the background light shot noise spectrum. According to the present embodiment, the DSP 16 suitably estimates the overall noise spectrum by estimating the background light shot noise spectrum and the receiver noise spectrum, respectively.

FIG. 10B illustrates the receiver noise spectrum, the background light shot noise spectrum and the overall noise spectrum in cases that the amount of the background light which the APD 41 receives is relatively large. According to the example illustrated in FIG. 10B, compared to the example illustrated in FIG. 10A, as the amount of the background light which the APD 41 receives increases, the background light shot noise spectrum therefore increases in all frequency domain. Since the amount of the background light which the APD 41 receives dynamically changes per segment, the DSP 16 needs to estimate the background light shot noise spectrum with respect to each segment.

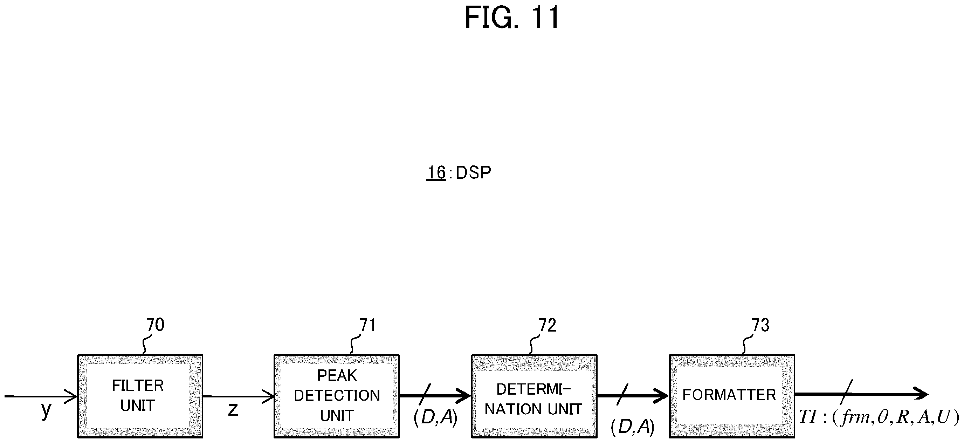

FIG. 11 is a block diagram of the DSP 16. The DSP 16 includes a filter unit 70, a peak detection unit 71, a determination unit 72 and a formatter 73.

The filter unit 70 applies a predetermined filtering to the receiving segment y thereby to calculate a filtered segment "z". As described later, the filter unit 70 performs the filtering in the frequency domain for the sake of reduction of the computation. The configuration of the filter unit 70 will be explained later.

The peak detection unit 71 detects such a point (i.e., peak point) that the amplitude is maximized and then outputs the delay (delay time) "D" and the amplitude "A" with respect to the peak point. The determination unit 72 selectively transmits only points whose amplitude A is larger than a threshold "tDet" to the formatter 73. The formatter 73 converts the delay D, the amplitude A, and frame index frm and the segment index seg of the target segment into appropriate forms to output it as the target information TI to the system CPU 5.

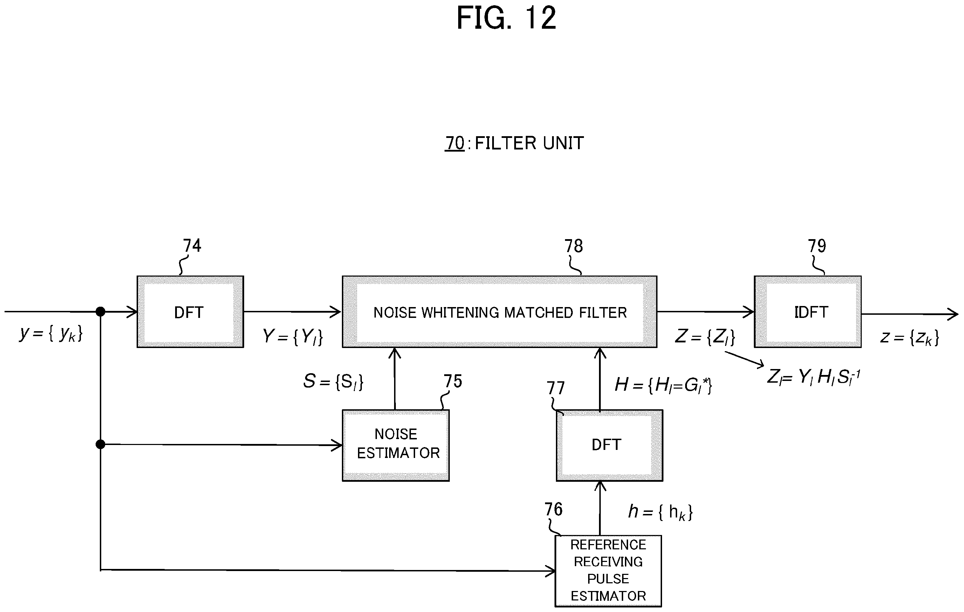

FIG. 12 is a block diagram of the filter unit 70. The filter unit 70 is configured to perform a filtering in the frequency domain to whiten the noise. The filter unit 70 mainly includes a DFT (Discrete Fourier Transform) processor 74, a noise estimator 75, a reference receiving pulse estimator 76, a DFT processor 77, a noise whitening matched filter 78 and an IDFT (Inverse Discrete Fourier Transform) processor 79.

The DFT processor 74 converts the receiving segment y into values in the frequency domain by DFT and outputs frequency spectrum "$Y = \{Y_l\}$" to the noise whitening matched filter 78. The sign "l" indicates an index of a sample point in the frequency domain. The noise estimator 75 calculates the overall noise spectrum "$S = \{S_l\}$" by estimating the receiver noise and the background light shot noise based on the receiving segment y. Then, the noise estimator 75 supplies the calculated overall noise spectrum S to the noise whitening matched filter 78. The receiver noise is an example of the "first noise signal" and the "first noise" according to the present invention and the background light shot noise is an example of the "second noise signal" according to the present invention. The specific configuration of the noise estimator 75 will be explained later.

The reference receiving pulse estimator 76 estimates the impulse response "h" with which the receiving segment y is convolved. For example, provided that the noise is a white noise and that the impulse response in the overall system is significantly shorter than the gate width wGate, the impulse response h is set to satisfy the following equation to achieve a high degree of the SNR.

$$\mathbf{h} = \{h_k : k = 0,1,\cdots,N-1\}$$
$$\mathbf{g} = \{g_k : k = 0,1,\cdots,N-1\}$$

$$N = wGate$$

$$h_k = \begin{cases} g_0 & for\ k = 0 \\ g_{N-k} & for\ k = 1,2,\cdots,N-1 \end{cases}$$

Regarding the above equation (referred to as "relational equation A") , the reference receiving pulse "g" indicates a waveform of the receiving segment measured in cases that an object is placed at the origin (R= 0m) of the scan. Besides, the reference receiving pulse g represents the impulse response in the overall system which includes the transmitter 30 and the receiver 40. A specific configuration of the reference receiving pulse estimator 76 will be described later. The DFT processor 77 calculates the frequency response "$H = \{H_l = G_l^*\}$" by applying the DFT operation to the impulse response h and outputs the frequency response H to the noise whitening matched filter 78.

The noise whitening matched filter 78 calculates the frequency spectrum "$Z = \{Z_l\}$" of the filtered segment "$z = \{z_k\}$" by multiplying the frequency spectrum Y by the inverse characteristics of the overall noise spectrum S and further multiplying the multiplied frequency spectrum Y by the frequency response H. Namely, the noise whitening matched filter 78 calculates the frequency spectrum Z according to the equation "$Z_l = Y_l\ H_l\ S_l^{-1}$".

A supplemental explanation will be given of the effect by the calculation in the frequency domain by the noise whitening matched filter 78. Generally, in cases that a noise whitening filter is implemented by a finite impulse response (FIR), the convolution operation on the inverse characteristics of the noise spectrum should be performed and it is expected that the number of the taps of the FIR filter is large. When the number of the taps of the FIR filter is large, the amount of computation by the multiplication operation in the frequency domain is much smaller than the amount of computation by the convolution operation in the time domain. Above matters considered, according to the embodiment, the noise whitening matched filter 78 applies the filtering to the receiving segment y in the frequency domain thereby to suitably reduce the amount of computation.

The IDFT processor 79 calculates the filtered segment z in the time domain by applying the IDFT operation to the frequency spectrum Z. Then, the IDFT processor 79 supplies the calculated filtered segment z to the peak detection unit 71.

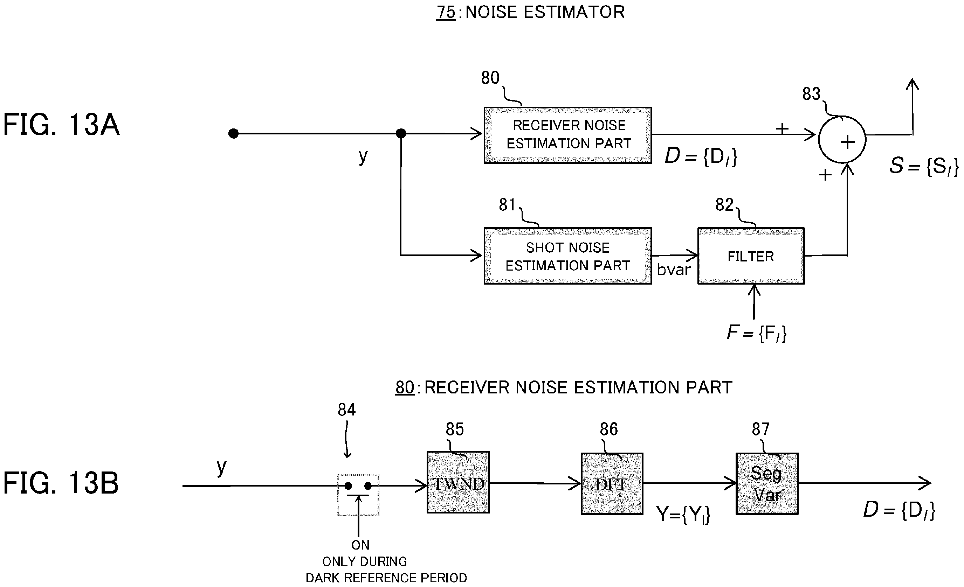

FIG. 13A is a block diagram of the signal processing executed by the noise estimator 75. As illustrated in FIG. 13A, the noise estimator 75 includes a receiver noise estimation part 80, a shot noise estimation part 81, a filter 82 and an operator 83.

The receiver noise estimation part 80 estimates the receiver noise spectrum "$D = \{D_l\}$" based on the receiving segment y. The shot noise estimation part 81 calculates, on the basis of the receiving segment y, the variance "bvar" equivalent to the degree of the shot noise generated due to the background light. Then, the filter 82 multiplies the frequency characteristics "$F = \{F_l\}$" in the overall circuit system of the receiver 40 by the variance bvar and supplies it to the operator 83. The frequency characteristics F are memorized in the W register in advance so that the DSP 16 can refer to the frequency characteristics F. The operator 83 calculates the overall noise spectrum S by summing the output of the receiver noise estimation part 80 and the output of the filter 82 with respect to each frequency.

FIG. 13B is a block diagram of the signal processing executed by the receiver noise estimation part 80. The receiver noise estimation part 80 includes a switch 84, a window block (TWND) 85, a DFT block 86 and a variance calculation block 87.

The switch 84 is a switch controlled to be turned on only during the dark reference period Td and supplies the receiving segment y generated in the dark reference period Td to the window block 85. The window block 85 applies a window function to the receiving segment y in the time domain. For example, the window block 85 applies a full cosine roll-off filter to the receiving segment y generated in the dark reference period Td. The DFT block 86 applies the DFT operation to the output of the window block 85 thereby to calculate the frequency spectrum Y of the receiving segment y. The variance calculation block 87 calculates the receiver noise spectrum D corresponding to the variance of the frequency spectrum Y with respect to each frequency pin (i.e., for every index I) according to the following equation.

$$D(l) = \left( \left( \sum_{s=0}^{s<nseg} Y(s,l)^2 \right) \Big/ \mathrm{nseg} \right) - \left( \left( \sum_{s=0}^{s<nseg} Y(s,l) \right) \Big/ \mathrm{nseg} \right)^2$$

It is noted that the variance calculation block 87 may average, by an IIR filter and the like, the receiver noise spectrum D calculated in each frame period through frame direction (i.e., among different frame indexes). The computation of the receiver noise spectrum D may be conducted in the developing process or in the manufacturing process of the lidar 1. When the computation is conducted in the developing process, the representative value of the computed values for multiple lidars 1 is used. When the measurement is conducted in the manufacturing process, each computed value for each lidar 1 is used. In some embodiment, information associated with the receiver noise such as the receiver noise spectrum that is preliminarily computed in the developing process or in the manufacturing process may be stored on a storage unit (e.g., ROM). According to such a configuration, instead of performing the receiver noise estimation process by the receiver noise estimation part 80, it is only necessary for the lidar 1 to refer to the information associated with the receiver noise stored on the storage unit as necessary. In this case, the information associated with the receiver noise such as the above receiver noise spectrum is an example of the "information associated with the first noise" according to the present invention.

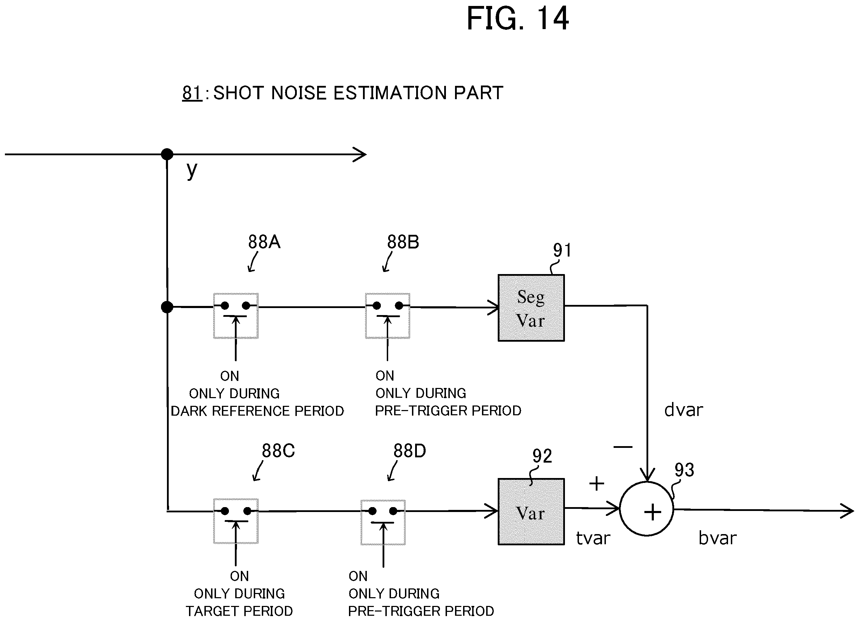

FIG. 14 is a block diagram of the signal processing executed by the shot noise estimation part 81. As illustrated in FIG. 14, the shot noise estimation part 81 includes switches 88A to 88D, a first variance calculator 91 and a second variance calculator 92 and an operator 93.

The switch 88A is a switch controlled to be turned on only during the dark reference period Td. The switch 88B is a switch controlled to be turned on only in the pre-trigger period Tp. Thus, the receiving segment y generated in the pre-trigger period Tp of the dark reference period Td is supplied to the first variance calculator 91. Then, according to the following equation, the first variance calculator 91 calculates the variance "dvar" for at least one segment in the dark reference period Td when the background light is not substantially received.

$$\mathrm{dvar} = \left( \left( \sum_{k=0}^{k<\mathrm{dTrg}} y(k)^2 \right) \Big/ \mathrm{dTrg} \right) - \left( \left( \sum_{k=0}^{k<\mathrm{dTrg}} y(k) \right) \Big/ \mathrm{dTrg} \right)^2$$

It is noted that the first variance calculator 91 may calculate the variance dvar for multiple segments included in the dark reference period Td and that the first variance calculator 91 may calculate the variance dvar for multiple frames. It is also noted that the calculation process of the variance dvar may be implemented in the developing process of the lidar 1 or in the manufacturing process thereof.

The switch 88C is a switch controlled to be turned on only in the target period Tt. The switch 88D is a switch controlled to be turned on only in the pre-trigger period Tp. Thus, the receiving segment y generated in the pre-trigger period Tp of the target period Tt is supplied to the second variance calculator 92. Then, according to the following equation, for each segment, the second variance calculator 92 calculates the variance "tvar" of the supplied receiving segment y.

$$\text{tvar} = \left(\left(\sum_{k=0}^{k<\text{dTrg}} y(k)^2\right)\bigg/\text{dTrg}\right) - \left(\left(\sum_{k=0}^{k<\text{dTrg}} y(k)\right)\bigg/\text{dTrg}\right)^2$$

The operator 93 calculates the variance bvar for each segment by subtracting the variance dvar from the variance tvar calculated by the second variance calculator 92 with respect to each segment. It is noted that the variance dvar calculated by the first variance calculator 91 is a variance based on the receiving segment y in which the increase in the shot noise due to the receiving background light amount does not occur and that the variance tvar calculated by the second variance calculator 92 is a variance based on the receiving segment y in which the increase in the shot noise due to the receiving background light amount occur. Accordingly, for each segment in which the amount of the background light received by the APD 41 varies, the operator 93 can suitably calculate the variance bvar corresponding to the increase in the shot noise generated due to the receiving background light amount.

In some embodiments, instead of calculating the variance bvar based on the receiving segment y in the pre-trigger period Tp, the shot noise estimation unit 77 may calculate the variance bvar based on the receiving segment y during any time period other than the pre-trigger period Tp when the return light Lr does not occur in each segment.

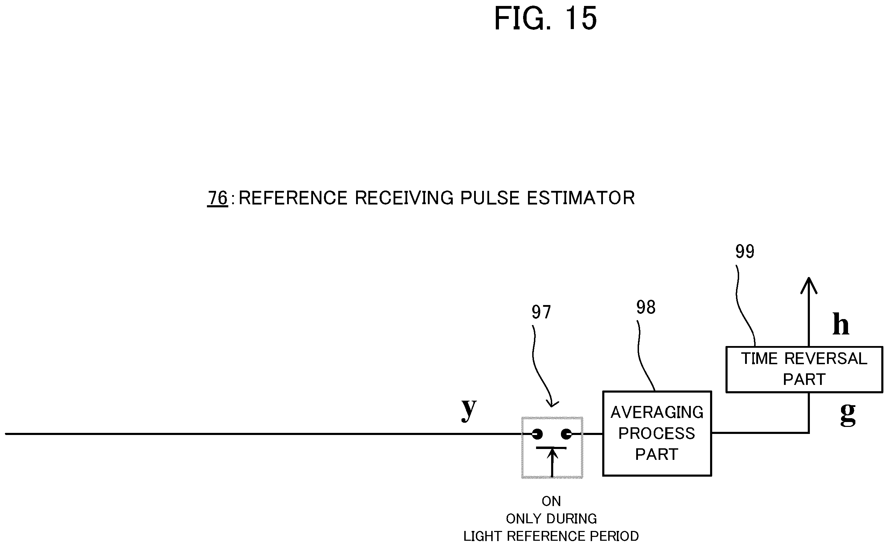

FIG. 15 is a block diagram of the signal processing executed by the reference receiving pulse estimator 76. As illustrated in FIG. 15, the reference receiving pulse estimator 76 includes a switch 97, an averaging process part 98 and a time reversal part 99.

The switch 97 is a switch controlled to be turned on only in the light reference period Tr and supplies the averaging process part 98 with the receiving segment y generated in the light reference period Tr. It is noted that the switch 97 does not have to be turned on during overall light reference period Tr and may be set to be turned on during a part of the light reference period Tr.

The averaging process part 98 averages the receiving segment y supplied during a period when the switch 97 is turned on and supplies the averaged receiving segment y as an estimated reference receiving pulse g to the time reversal part 99. In this case, for example, the averaging process part 98 accumulates the receiving segment y sequentially supplied from the switch 97 during a single frame period and then calculates, as the estimated reference receiving pulse g, the averaged receiving segment y by dividing the accumulated receiving segments y by the number of the receiving segments y subjected to the accumulation. In another example, through an IIR filter and the like, the averaging process part 98 averages, in the frame direction (i.e., among different frame indexes), the averaged receiving segment y per frame and outputs the outcome as the estimated reference receiving pulse g.

The time reversal part 99 generates the impulse response h from the reference receiving pulse g according to the above relational equation A. In this case, the reference receiving pulse g and the impulse response h have a time-reversal relation to each other in each segment period. Then, the IDFT processor 79 supplies the generated impulse response h to the DFT processor 77 (see FIG. 12). It is noted that the measurement of the impulse response h may be implemented in the developing process or in the manufacturing process of the lidar 1. In some embodiments, the impulse response h or the frequency response H may be set to the W register by the system CPU 5 in advance so that the SNR at the filter output is large. In this case, the filter unit 70 may not have the reference receiving pulse estimator 76 (and the DFT processor 77).

As described above, the lidar 1 is provided with: the scanner 55 which emits the outgoing light Lo; the dark reference reflective member 7 which is arranged in a predetermined emitting direction and which absorbs the outgoing light Lo; the APD 41 which receives the return light Lr that is the outgoing light Lo reflected by an object; and the DSP 16. The DSP 16 estimates at least the receiver noise on the basis of the output signal of the APD 41 in the dark reference period Td when the dark reference reflective member 7 is irradiated with the outgoing light Lo. Then, on the basis of the estimated receiver noise, the DSP 16 applies a filtering to the output signal of the APD 41. Thereby, the lidar 1 suitably applies a filtering to the output signal of the APD 41 thereby to achieve the high degree of the SNR.

BRIEF DESCRIPTION OF REFERENCE NUMBERS

[0091]

1　　Lidar
5　　System CPU
7　　Dark reference reflective member
10　ASIC
30　Transmitter
40　Receiver
50　Scan optical component

**Claims**

1. An information processing device (1) comprising:

   a scan optical component (50) which emits an electromagnetic ray while changing an emitting direction thereof;
   an absorber (7) which is arranged in a predetermined emitting direction and which absorbs the electromagnetic ray;
   a receiving unit (40) which receives, through the scan optical component, a reflective ray that is the electromagnetic ray reflected by an object;
   a first estimation unit (16) configured to estimate a first noise signal based on an output signal of the receiving unit (40) generated in an emitting period when the emitting direction by the scan optical component (50) is the predetermined emitting direction;
   a second estimation unit (16) configured to estimate a second noise signal, which is generated due to reception of background light, which is generated through the irradiation of the object by the sun, by the receiving unit (40), based on the output signal of the receiving unit (40) generated in a pre-trigger period when the electromagnetic ray is not emitted, and
   a processing unit (16) configured to process the output signal of the receiving unit (40) based on the first noise signal and the second noise signal,
   wherein the second estimation unit (16) estimates the second noise signal based on:

   the output signal of the receiving unit (40) generated in the pre-trigger period when the emitting direction by the scan optical component (50) is the predetermined emitting direction; and
   the output signal of the receiving unit (40) generated in the pre-trigger period when the emitting direction by the scan optical component (50) is a target emitting direction for detection of the object.

2. The information processing device (1) according to claim 1,
   wherein the processing unit (16) is a matched filter (78) which whitens a noise of the output signal of the receiving unit (40).

3. The information processing device (1) according to claim 2, wherein the processing unit (16) processes the output signal of the receiving unit (40) in a frequency domain.

4. A control method executed by an information processing device (1), the information processing device (1) including:

   a scan optical component (50) which emits an electromagnetic ray while changing an emitting direction thereof;
   an absorber (7) which is arranged in a predetermined emitting direction and which absorbs the electromagnetic ray; and
   a receiving unit (40) which receives, through the scan optical component, a reflective ray that is the electromagnetic ray reflected by an object,
   the control method comprising:

   a first estimation process to estimate a first noise signal based on an output signal of the receiving unit (40) generated in an emitting when the emitting direction by the scan optical component (50) is the predetermined emitting direction;
   a second estimation process to estimate a second noise signal, which is generated due to reception of background light, which is generated through the irradiation of the object by the sun, by the receiving unit (40) based on the output signal of the receiving unit (40) generated in a pre-trigger period when the electromagnetic ray is not emitted; and
   a processing process to process the output signal of the receiving unit (40) based on the first noise signal and the second noise signal,
   wherein the second estimation process estimates the second noise signal based on:

   the output signal of the receiving unit (40) generated in the pre-trigger period when the emitting direction by the scan optical component (50) is the predetermined emitting direction; and
   the output signal of the receiving unit (40) generated in the pre-trigger period when the emitting direction by the scan optical component (50) is a target emitting direction for detection of the object.

5. A program comprising instructions which, when executed by a computer (16) of the information processing device (1) of claim 1, cause the computer to carry out the method of claim 4.

6. A storage medium storing the program according to claim 5.

**Patentansprüche**

1. Eine Informationsverarbeitungsvorrichtung (1), umfassend:

   eine Scanoptikkomponente (50), die einen elektromagnetischen Strahl emittiert, während eine Emissionsrichtung von diesem geändert wird,
   einen Absorber (7), der in einer vorermittelten Emissionsrichtung angeordnet ist und den elektromagnetischen Strahl absorbiert;
   eine Empfangseinheit (40), die, durch die Scanoptikkomponente, einen reflektierten Strahl, der der mittels eines Objekts reflektierte elektromagnetische Strahl ist, empfängt,
   eine erste Schätzeinheit (16), die eingerichtet ist, ein erstes Rauschsignal basierend auf einem Ausgabesignal der Empfangseinheit (40), das in einem Emissionszeitraum erzeugt ist, wenn die Emissionsrichtung mittels der Scanoptikkomponente (50) die vorermittelte Emissionsrichtung ist, zu schätzen,
   eine zweite Schätzeinheit (16), die eingerichtet ist, ein zweites Rauschsignal, das aufgrund des Empfangs von Hintergrundlicht, das durch die Bestrahlung des Objekts mittels der Sonne erzeugt ist, mittels der Empfangseinheit (40) erzeugt ist, basierend auf dem Ausgabesignal der Empfangseinheit (40), das in einem Vortriggerzeitraum erzeugt ist, wenn der elektromagnetische Strahl nicht emittiert wird, zu schätzen, und
   eine Verarbeitungseinheit (16), die eingerichtet ist, das Ausgabesignal der Empfangseinheit (40) basierend auf dem ersten Rauschsignal und dem zweiten Rauschsignal zu verarbeiten,
   wobei die zweite Schätzeinheit (16) das zweite Rauschsignal schätzt basierend auf:

   dem Ausgabesignal der Empfangseinheit (40), das in dem Vortriggerzeitraum erzeugt ist, wenn die Emissionsrichtung mittels der Scanoptikkomponente (50) die vorermittelte Emissionsrichtung ist, und
   dem Ausgabesignal der Empfangseinheit (40), das in dem Vortriggerzeitraum erzeugt ist, wenn die Emissionsrichtung mittels der Scanoptikkomponente (50) eine Zielemissionsrichtung für die Detektion des Objekts ist.

2. Die Informationsverarbeitungsvorrichtung (1) gemäß Anspruch 1,
   wobei die Verarbeitungseinheit (16) ein Optimalfilter (78) ist, das ein Rauschen des Ausgabesignals der Empfangseinheit (40) weißer macht.

3. Die Informationsverarbeitungsvorrichtung (1) gemäß Anspruch 2, wobei die Verarbeitungseinheit (16) das Ausgabesignal der Empfangseinheit (40) in einer Frequenzdomäne verarbeitet.

4. Ein Steuerverfahren, das mittels einer Informationsverarbeitungsvorrichtung (1) ausgeführt wird, wobei die Informationsverarbeitungsvorrichtung (1) enthält:

   eine Scanoptikkomponente (50), die einen elektromagnetischen Strahl emittiert, während eine Emissionsrichtung von diesem geändert wird,
   einen Absorber (7), der in einer vorermittelten Emissionsrichtung angeordnet ist und den elektromagnetischen Strahl absorbiert;
   eine Empfangseinheit (40), die, durch die Scanoptikkomponente, einen reflektierten Strahl, der der mittels eines Objekts reflektierte elektromagnetische Strahl ist, empfängt,
   das Steuerverfahren umfassend:

   einen ersten Schätzprozess, um ein erstes Rauschsignal basierend auf einem Ausgabesignal der Empfangseinheit (40), das in einem Emissionszeitraum erzeugt ist, wenn die Emissionsrichtung mittels der Scanoptikkomponente (50) die vorermittelte Emissionsrichtung ist, zu schätzen,
   einen zweiten Schätzprozess, um ein zweites Rauschsignal, das aufgrund des Empfangs von Hintergrundlicht, das durch die Bestrahlung des Objekts mittels der Sonne erzeugt ist, mittels der Empfangseinheit (40) erzeugt ist, basierend auf dem Ausgabesignal der Empfangseinheit (40), das in einem Vortriggerzeitraum erzeugt ist, wenn der elektromagnetische Strahl nicht emittiert wird, zu schätzen, und
   einen Verarbeitungsprozess, um das Ausgabesignal der Empfangseinheit (40) basierend auf dem ersten Rauschsignal und dem zweiten Rauschsignal zu verarbeiten,
wobei der zweite Schätzprozess das zweite Rauschsignal schätzt basierend auf:

dem Ausgabesignal der Empfangseinheit (40), das in dem Vortriggerzeitraum erzeugt ist, wenn die Emissionsrichtung mittels der Scanoptikkomponente (50) die vorermittelte Emissionsrichtung ist, und dem Ausgabesignal der Empfangseinheit (40), das in dem Vortriggerzeitraum erzeugt ist, wenn die Emissionsrichtung mittels der Scanoptikkomponente (50) eine Zielemissionsrichtung für die Detektion des Objekts ist.

5. Ein Programm, umfassend Instruktionen, die, wenn mittels eines Computers (16) der Informationsverarbeitungsvorrichtung (1) gemäß Anspruch 1 ausgeführt, den Computer veranlassen, das Verfahren gemäß Anspruch 4 auszuführen.

6. Ein Speichermedium, das das Programm gemäß Anspruch 5 speichert.

**Revendications**

1. Dispositif de traitement d'informations (1), comprenant :

un composant optique de balayage (50) qui émet un faisceau électromagnétique tout en modifiant une direction d'émission de celui-ci ;
un absorbeur (7) qui est disposé dans une direction d'émission prédéterminée et qui absorbe le faisceau électromagnétique ;
une unité de réception (40) qui reçoit, par l'intermédiaire du composant optique de balayage, un faisceau réfléchi qui est le faisceau électromagnétique réfléchi par un objet ;
une première unité d'estimation (16) configurée pour estimer un premier signal de bruit sur la base d'un signal de sortie de l'unité de réception (40) généré dans une période d'émission lorsque la direction d'émission par le composant optique de balayage (50) est la direction d'émission prédéterminée ;
une deuxième unité d'estimation (16) configurée pour estimer un deuxième signal de bruit généré en raison de la réception de lumière d'arrière-plan générée par l'irradiation de l'objet par le soleil par l'unité de réception (40), sur la base du signal de sortie de l'unité de réception (40) généré dans une période de pré-déclenchement lorsque le faisceau électromagnétique n'est pas émis, et
une unité de traitement (16) configurée pour traiter le signal de sortie de l'unité de réception (40) sur la base du premier signal de bruit et du deuxième signal de bruit,
dans lequel la deuxième unité d'estimation (16) estime le deuxième signal de bruit sur la base du :

signal de sortie de l'unité de réception (40) généré dans la période de pré-déclenchement lorsque la direction d'émission par le composant optique de balayage (50) est la direction d'émission prédéterminée ; et
du signal de sortie de l'unité de réception (40) généré dans la période de pré-déclenchement, lorsque la direction d'émission par le composant optique de balayage (50) est une direction d'émission cible pour la détection de l'objet.

2. Dispositif de traitement d'informations (1) selon la revendication 1,
dans lequel l'unité de traitement (16) est un filtre adapté (78) qui rend plus blanc un bruit du signal de sortie de l'unité de réception (40).

3. Dispositif de traitement d'informations (1) selon la revendication 2, dans lequel l'unité de traitement (16) traite le signal de sortie de l'unité de réception (40) dans un domaine fréquentiel.

4. Procédé de commande exécuté par un dispositif de traitement d'informations (1), le dispositif de traitement d'informations (1) comprenant :

un composant optique de balayage (50) qui émet un faisceau électromagnétique tout en modifiant une direction d'émission de celui-ci ;
un absorbeur (7) qui est disposé dans une direction d'émission prédéterminée et qui absorbe le faisceau électromagnétique ; et
une unité de réception (40) qui reçoit, par l'intermédiaire du composant optique de balayage, un faisceau réfléchi qui est le faisceau électromagnétique réfléchi par un objet,
le procédé de commande comprenant :

un premier processus d'estimation pour estimer un premier signal de bruit sur la base d'un signal de sortie de l'unité de réception (40) généré dans une période d'émission lorsque la direction d'émission par le composant optique de balayage (50) est la direction d'émission prédéterminée ;
un deuxième processus d'estimation pour estimer un deuxième signal de bruit généré en raison de la réception de lumière d'arrière-plan générée par l'irradiation de l'objet par le soleil, par l'unité de réception (40) sur la base du signal de sortie de l'unité de réception (40) généré dans une période de pré-déclenchement lorsque le faisceau électromagnétique n'est pas émis, et
un processus de traitement pour traiter le signal de sortie de l'unité de réception (40) sur la base du premier signal de bruit et du deuxième signal de bruit,
dans lequel le deuxième processus d'estimation estime le deuxième signal de bruit sur la base du :

signal de sortie de l'unité de réception (40) généré dans la période de pré-déclenchement lorsque la direction d'émission par le composant optique de balayage (50) est la direction d'émission prédéterminée ; et
du signal de sortie de l'unité de réception (40) généré dans la période de pré-déclenchement, lorsque la direction d'émission par le composant optique de balayage (50) est une direction d'émission cible pour la détection de l'objet.

5. Programme comprenant des instructions qui, lorsqu'elles sont exécutées par un ordinateur (16) du dispositif de traitement d'informations (1) selon la revendication 1, amènent l'ordinateur à exécuter le procédé selon la revendication 4.

6. Support de stockage stockant le programme selon la revendication 5.

# FIG. 1

1

EP 3 647 811 B1

16

## FIG. 2A

$V_{TX}$

30

31 R

33

36

PULSE TRIGGER SIGNAL PT

32

34

35 LD

## FIG. 2B

40

42

43 R

$V_{RX}$

41

APD

45 R

47 LPF

44

46

**FIG. 3**

**FIG. 4**

| NAME | DEFINITION | FORMAT | DEFAULT | UNIT |
|---|---|---|---|---|
| *nSeg* | SEGMENT CYCLE | unsigned | 8192 | Tsys |
| *dTrg* | TRIGGER DELAY | signed | 0 | Tsys |
| *wTrg* | TRIGGER WIDTH | unsigned | 64 | Tsys |
| *dGate* | GATE DELAY | signed | 0 | Tsys |
| *wGate* | GATE WIDTH | unsigned | 1024 | Tsys |

# FIG. 5

PULSE TRIGGER SIGNAL
PT

AD GATE SIGNAL
GT

EP 3 647 811 B1

FIG. 6A

FIG. 6B — PULSE TRIGGER SIGNAL PT

FIG. 6C

ADC OUTPUT: RECEIVING SEGMENT SIGNAL RS

FIG. 6D

FIG. 6E

FIG. 6F — AD GATE SIGNAL GT

$nSeg = 8192\ (16usec,\ 2400m)$

Segment SLOT

$dTrg=0$

SYSTEM DELAY
$D_{SYS}$  FROM Ro=0m TARGET

TOF DELAY
$D$  FROM R TARGET

FROM Rmax TARGET

$L_{IR}$

$dGate=0$
$wGate = 1024\ (2usec,\ 300m)$

EP 3 647 811 B1

FIG. 7A    PULSE TRIGGER SIGNAL
PT

dTrg=128

FIG. 7B

SYSTEM DELAY

$D_{SYS}$

FROM Ro=0m TARGET

ADC OUTPUT:
RECEIVING SEGMENT
SIGNAL RS

TOF DELAY

$D$

FROM R TARGET

FIG. 7C

PRE-TRIGGER PERIOD

FIG. 7D    AD GATE SIGNAL GT

wGate = 1024(2usec, 300m)

FIG. 8A

360 PULSE
(1 PULSE /1° )

PHASE A

PHASE Z

SINGLE ROTATION

FIG. 8B

SINGLE FRAME

1800 SEGMENTS

| 0 | 1 | 2 | 3 | 4 | 5 | 6 | 7 | 8 | 9 | 10 | 11 | 1 | 5 | 1796 | 1797 | 1798 | 1799 | 0 | 1 | 2 |

PHASE Z

dEncZ

PHASE A

dEncA

360A-PULSES

REAR OF LIDAR

7:DARK REFERENCE REFLECTIVE MEMBER

8:LIGHT REFERENCE REFLECTIVE MEMBER

25:HOUSING

$\theta b$  $\theta a$

A1

SCANNER

55

Lo

Lr

FIG. 9A

FRONT OF LIDAR

8

25

7

Lr

Lo

SCANNER

55

FIG. 9B

FIG. 10A

dB

+

dB

=

dB

FREQUENCY
RECEIVER NOISE SPECTRUM

FREQUENCY
BACKGROUND LIGHT SHOT
NOISE SPECTRUM

FREQUENCY
OVERALL NOISE SPECTRUM

FIG. 10B

dB

+

dB

=

dB

FREQUENCY
RECEIVER NOISE SPECTRUM

FREQUENCY
BACKGROUND LIGHT SHOT
NOISE SPECTRUM

FREQUENCY
OVERALL NOISE SPECTRUM

EP 3 647 811 B1

# FIG. 11

16:DSP

FILTER UNIT 70

PEAK DETECTION UNIT 71

DETERMI-NATION UNIT 72

FORMATTER 73

$y$ → FILTER UNIT → $z$ → PEAK DETECTION UNIT → $(D,A)$ → DETERMI-NATION UNIT → $(D,A)$ → FORMATTER → $TI : (frm, \theta, R, A, U)$

# FIG. 12

EP 3 647 811 B1

<u>70</u>:FILTER UNIT

$y = \{ y_k \}$

**74** DFT

$Y = \{Y_l\}$

$S = \{S_l\}$

**78** NOISE WHITENING MATCHED FILTER

$Z = \{Z_l\}$

**79** IDFT

$z = \{z_k\}$

$Z_l = Y_l H_l S_l^{-1}$

**75** NOISE ESTIMATOR

**77** DFT

$H = \{H_l = G_l^*\}$

$h = \{ h_k \}$

**76** REFERENCE RECEIVING PULSE ESTIMATOR

75 : NOISE ESTIMATOR

## FIG. 13A

## 80 : RECEIVER NOISE ESTIMATION PART

## FIG. 13B

EP 3 647 811 B1

# FIG. 14

81 : SHOT NOISE ESTIMATION PART

y

88A    88B    91

Seg
Var

ON
ONLY DURING
DARK REFERENCE PERIOD

ON
ONLY DURING
PRE-TRIGGER PERIOD

dvar

88C    88D    92

Var

ON
ONLY DURING
TARGET PERIOD

ON
ONLY DURING
PRE-TRIGGER PERIOD

tvar

93

−    +

+

bvar

# FIG. 15

76:REFERENCE RECEIVING PULSE ESTIMATOR

97

98

99

**y**

ON
ONLY DURING
LIGHT REFERENCE PERIOD

AVERAGING
PROCESS
PART

TIME REVERSAL
PART

**h**

**g**

**REFERENCES CITED IN THE DESCRIPTION**

**Patent documents cited in the description**

- JP 2007225318 A
- WO 2014203654 A1
- JP H10160837 A
- WO 2011084799 A1
- JP 2014235048 A